# FASCICULE DE BREVET EUROPEEN

(11) **EP 0 819 458 B1**
(45) Date de publication et mention de la délivrance du brevet: **06.11.2002**
(21) Numéro de dépôt: 97401698.2
(22) Date de dépôt: 15.07.1997
(51) Int. Cl.: B01D 35/147

(54) **Filtre à gazole pour moteur diesel et dispositif d'alimentation incluant un tel filtre**
Kraftstoffilter für Dieselmotor und Zuführvorrichtung mit solchem Filter
Fuel filter for diesel engin and feeding device with such filter

(30) Priorité: 18.07.1996 FR 9609013
(43) Date de publication de la demande: 21.01.1998
(73) Titulaire: FILTRAUTO, 78180 Montigny le Bretonneux (FR)
(72) Inventeur: Brignoli, Bernard, 92000 Nanterre (FR); Le Pericaut, Serge, 92290 Chatenay Malabry (FR)
(74) Mandataire: Burbaud, Eric

(56) Documents cités:
- EP-A- 0 145 986
- DE-A- 2 429 510
- DE-A- 3 916 162
- US-A- 4 615 800
- US-A- 4 681 660

## Description

La présente invention est relative aux filtres à gazole pour moteurs diesel et aux dispositifs d'alimentation comprenant de tels filtres.

On connaît des filtres à gazole pour moteurs diesel comportant une cartouche filtrante contenue dans un boîtier étanche qui comprend lui-même :
- un passage d'entrée qui est destiné à recevoir du gazole à filtrer acheminé par l'intermédiaire d'un circuit d'entrée relié à un réservoir de gazole, le passage d'entrée communiquant avec une chambre d'arrivée de gazole qui est située à l'intérieur du boîtier en amont de l'élément filtrant,
- un passage de sortie de gazole filtré, qui est situé en aval de l'élément filtrant et qui est destiné à être raccordé à une pompe d'injection haute pression,
- et une vanne à trois voies comportant :

. une première voie qui communique avec l'extérieur du boîtier par l'intermédiaire d'un premier raccord destiné à recevoir du gazole en excès provenant de la pompe d'injection haute pression, ce gazole en excès présentant une pression inférieure à la pression qui règne dans le passage d'entrée du filtre,
. une deuxième voie qui communique avec l'extérieur du boîtier par l'intermédiaire d'un deuxième raccord destiné à être relié au réservoir de gazole,
. et une troisième voie destinée à diriger le gazole en excès en amont de l'élément filtrant sans séjourner dans le réservoir, la vanne à trois voies pouvant être actionnée pour orienter majoritairement le gazole en excès soit vers la deuxième voie, soit vers la troisième voie.

Le document EP-A-0 145 986 décrit un exemple d'un tel filtre à gazole.

Ce filtre à gazole est adapté pour fonctionner au sein d'un dispositif d'alimentation en gazole dans lequel la pression du gazole en excès arrivant dans la première voie de la vanne à trois voies est supérieure à la pression du gazole arrivant dans le passage d'entrée du filtre, puisque la troisième voie de la vanne à trois voies communique directement avec la chambre d'arrivée du gazole à l'intérieur du filtre.

Mais le filtre en question ne pourrait pas fonctionner au sein d'un dispositif d'alimentation en gazole dans lequel la pression du gazole en excès au niveau de la première voie de la vanne à trois voies est inférieure à la pression du gazole au niveau du passage d'entrée du filtre.

Par ailleurs, dans certains cas, la pompe d'injection haute pression du dispositif d'alimentation en gazole dans lequel est inclus le filtre doit être alimentée en gazole avec une pression d'alimentation située dans une plage relativement étroite : il en va ainsi notamment lorsque cette pompe d'injection haute pression est du type dit "common rail", c'est-à-dire lorsque la pompe d'injection haute pression alimente en permanence une rampe d'injecteurs pour injection directe qui sont commandés individuellement par un système électronique.

Dans ce cas, il est souhaitable d'éviter que la pression du gazole à l'entrée dans la pompe d'injection haute pression sorte de la plage optimale susmentionnée.

La présente invention a notamment pour but de palier cet inconvénient, en proposant un filtre à gazole qui puisse être utilisé au sein d'un dispositif d'alimentation en gazole dans lequel la pression du gazole en excès arrivant au niveau de la première voie de la vanne à trois voies est inférieure à la pression du gazole arrivant dans le passage d'entrée du filtre, et dans lequel la pompe d'injection haute pression doit être alimentée en gazole avec une pression d'alimentation comprise dans une plage prédéterminée.

A cet effet, selon l'invention, un filtre à gazole du genre en question est essentiellement caractérisé en ce qu'il comporte en outre un passage de dérivation qui fait communiquer le passage de sortie avec au moins l'une des trois voies de la vanne à trois voies, ce passage de sortie étant équipé d'un dispositif régulateur de pression adapté pour fermer ledit passage de dérivation tant qu'il règne dans le passage de sortie une pression inférieure à une pression prédéterminée, et pour ouvrir le passage de dérivation lorsque la pression dans le passage de sortie devient supérieure à ladite pression prédéterminée, et en ce que la troisième voie communique avec l'extérieur du boîtier par l'intermédiaire d'un troisième raccord.

Dans des modes de réalisation préférés, on peut éventuellement avoir recours en outre à l'une et/ou à l'autre des dispositions suivantes :
- la chambre d'arrivée présente une zone supérieure qui communique avec la deuxième voie de la vanne à trois voies par l'intermédiaire d'un orifice de dégazage ;
- le dispositif régulateur de pression est une soupape de décharge qui comprend, d'une part, un siège annulaire traversé par le passage de dérivation, et d'autre part, un clapet sollicité contre ce siège par un ressort, à l'encontre de la pression régnant dans le passage de sortie ;
- le boîtier comprend un couvercle fixe et une cuve inférieure fixée à ce couvercle, le passage d'entrée, le passage de sortie, les trois voies de la vanne à trois voies, et le passage de dérivation étant formés dans la masse dudit couvercle ;
- le couvercle est moulé en matière plastique ;
- la vanne à trois voies comprend un puits vertical formé à l'intérieur du couvercle, ce puits vertical comportant des premier et deuxième sièges annulaires intérieurs qui le subdivisent en des premier, deuxième et troisième compartiments superposés communiquant respectivement avec les première, deuxième et troisième voies de la vanne à trois voies, le premier compartiment étant interposé entre les deuxième et troisième compartiments, et ledit premier compartiment contenant un organe de clapet qui est déplaçable en translation verticale sous l'effet de moyens d'actionnement entre, d'une part, une première position ou il est en contact étanche avec le premier siège en obturant la deuxième voie et, d'autre part, une deuxième position où il est en contact étanche avec le deuxième siège en obturant la troisième voie, le dispositif régulateur de pression étant une soupape de décharge qui comprend, d'une part, un siège annulaire qui communique avec le passage de sortie et qui est traversé par le passage de dérivation, et d'autre part, un clapet sollicité contre ce siège par un ressort, à l'encontre de la pression régnant dans le passage de sortie, ce clapet et ce ressort étant logés dans une chambre verticale formée dans le couvercle, et le passage de dérivation comprenant un premier conduit rectiligne horizontal qui est formé dans le couvercle et qui débouche, d'une part, dans la chambre contenant ledit clapet, et d'autre part, dans un des compartiments du puits vertical de la vanne à trois voies, ce compartiment débouchant à l'extérieur du boîtier du filtre par l'intermédiaire d'un deuxième conduit rectiligne qui forme le raccord correspondant à ce compartiment et qui est aligné avec le premier conduit rectiligne : ces conditions permettent en particulier une réalisation aisée du couvercle du filtre, notamment par moulage ;
- le deuxième compartiment du puits vertical de la vanne à trois voies est situé sous le premier compartiment et communique avec la zone supérieure de la chambre d'arrivée de gazole par l'intermédiaire d'un orifice de dégazage ;
- le puits vertical de la vanne à trois voies est un puits borgne débouchant vers le bas, ce puits étant fermé en partie inférieure par un bouchon qui est fixé au couvercle du boîtier et qui inclut l'orifice de dégazage, lequel orifice de dégazage présente une section de passage inférieure à 1 mm² ;
- le passage d'entrée et le passage de sortie du filtre communiquent avec l'extérieur du boîtier par l'intermédiaire respectivement de quatrième et cinquième raccords, les premier, deuxième, troisième, quatrième et cinquième raccords formant tous des conduits horizontaux parallèles les uns aux autres.

Par ailleurs, l'invention a également pour objet un dispositif d'alimentation en gazole incluant un filtre à gazole tel que défini ci-dessus et comprenant en outre :
- un réservoir de gazole,
- un circuit d'entrée qui inclut une pompe de gavage et qui relie le réservoir de gazole au passage d'entrée du filtre,
- une pompe d'injection haute pression alimentée par le passage de sortie du filtre et alimentant elle-même une rampe d'injecteurs,
- un circuit de retour de gazole, recevant du gazole en excès provenant de la pompe d'injection haute pression, ce circuit de retour de gazole étant relié au premier raccord du filtre, ce gazole en excès étant à une pression inférieure à la pression qui règne dans le passage d'entrée du filtre,
- une canalisation reliant le deuxième raccord du filtre au réservoir,
- et une canalisation reliant le troisième raccord du filtre au circuit d'entrée, en amont de la pompe de gavage.

D'autres caractéristiques et avantages de l'invention apparaîtront au cours de la description détaillée suivante d'une de ses formes de réalisation, donnée à titre d'exemple non limitatif, en regard des dessins joints.

Sur les dessins :
- la figure 1 est une vue en perspective d'un filtre à gazole selon une forme de réalisation de l'invention,
- la figure 2 est un schéma de principe d'un dispositif d'alimentation en gazole pour moteur diesel qui inclut le filtre de la figure 1,
- la figure 3 est une vue en coupe verticale du filtre de la figure 1,
- la figure 4 est une vue de détail de la figure 3,
- et la figure 5 est une vue en coupe selon la ligne V-V de la figure 4.

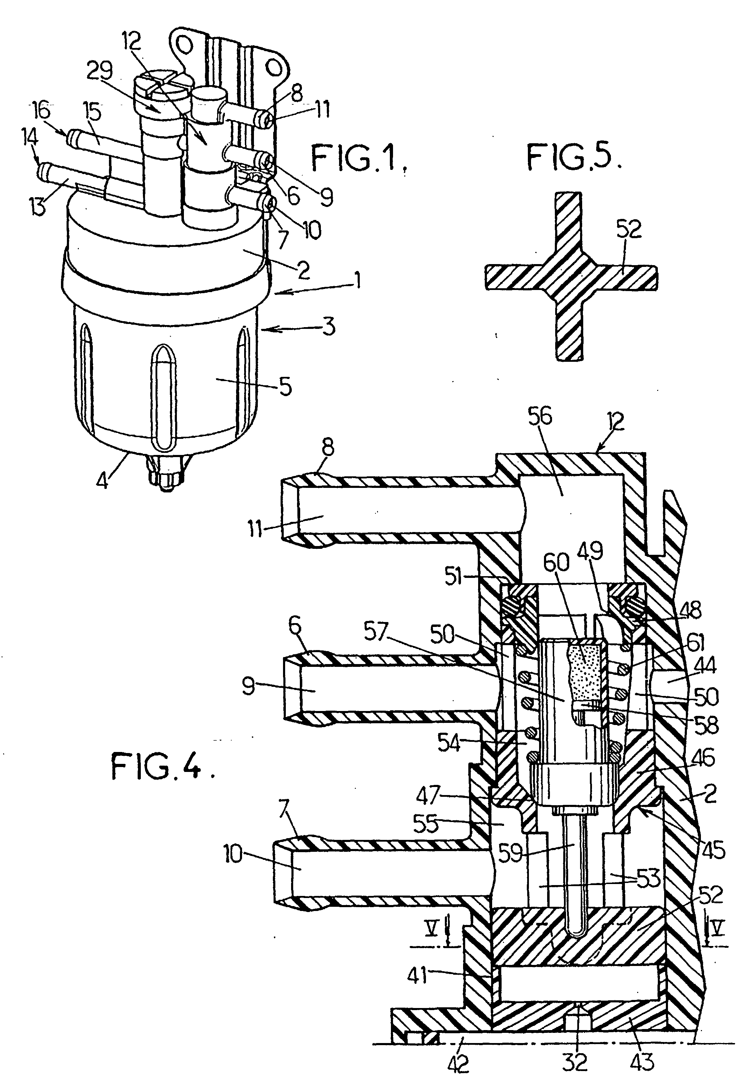

Le filtre à gazole 1 pour moteur diesel de véhicule qui est représenté sur la figure 1 se présente extérieurement sous la forme d'un boîtier qui contient un élément filtrant cylindrique (non visible sur la figure 1) et qui comprend :
- d'une part, un couvercle supérieur 2 fixe, qui peut être par exemple moulé en matière plastique et qui est généralement fixé au bloc moteur du véhicule,
- et d'autre part, une cuve 3 qui peut être par exemple également moulée en matière plastique et qui est fixée sous le couvercle 2 de façon amovible, par exemple par vissage, cette cuve 3 comportant un fond 4 et une paroi latérale 5 sensiblement cylindrique d'axe vertical.

Afin d'intégrer le filtre 1 dans un circuit d'alimentation en gazole, le couvercle fixe 2 de ce filtre est pourvu de cinq raccords, savoir :
- des premier, deuxième et troisième raccords 6, 7, 8, correspondant respectivement aux première, deuxième et troisième voies, 9, 10, 11, d'une vanne à trois voies 12 intégrée au couvercle 2,
- un quatrième raccord 13 correspondant à un passage d'entrée 14,
- et un cinquième raccord 15 correspondant à un passage de sortie 16.

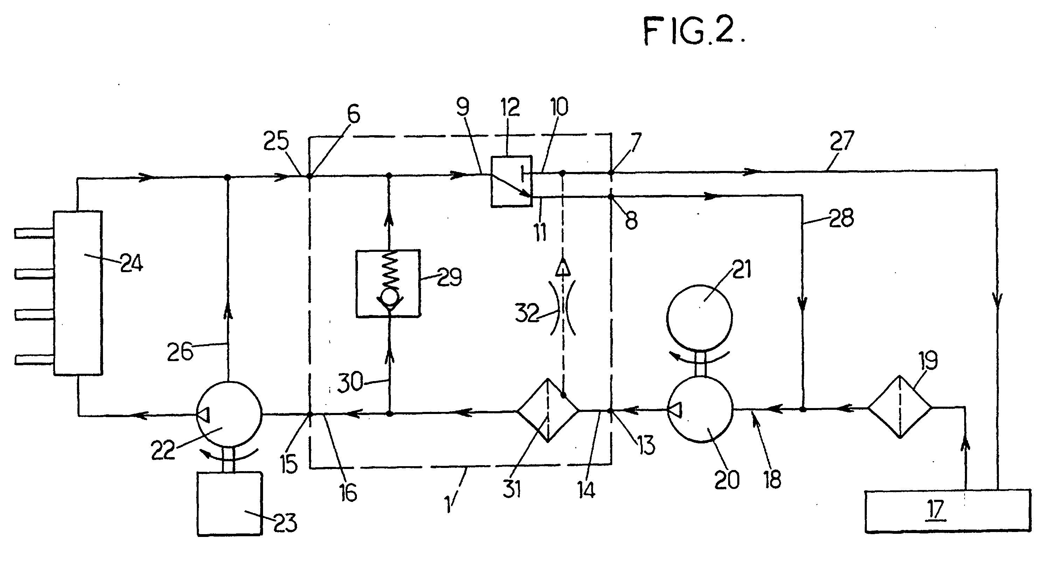

Comme représenté sur la figure 2, le circuit d'alimentation en gazole dans lequel est intégré le filtre 1 comprend, outre ce filtre :
- un réservoir 17 de gazole,
- un circuit d'entrée 18 qui inclut, d'amont en aval, un filtre grossier ou préfiltre 19 relié au réservoir 17, puis une pompe de gavage 20 qui est généralement entraînée par un moteur électrique 21 et dont la sortie est reliée au passage d'entrée 14 du filtre,
- une pompe d'injection haute pression 22 qui est généralement entraînée par un mécanisme 23 mû par le moteur diesel, cette pompe d'injection haute pression étant de préférence du type dit "common rail", c'est-à-dire alimentant, à une pression généralement supérieure à 1000 bars, une rampe 24 d'injecteurs pour injection directe dont les injecteurs sont montés en parallèle sur une canalisation commune et sont commandés par un système électronique (non représenté),
- un circuit 25 de retour de gazole en excès, qui est relié à la première voie 9 de la vanne 12 à trois voies et qui recueille, d'une part, du gazole envoyé directement par la pompe 22 dans un by-pass 26 sans passer par la rampe d'injecteurs 24, et d'autre part, du gazole provenant de la rampe d'injecteurs 24 et non consommé par cette rampe, la pression du gazole contenu dans le circuit 25 de retour de gazole étant par exemple supérieure d'environ 0,15 bar à la pression atmosphérique, du fait de fortes pertes de charge à la sortie de la rampe 24 d'injecteurs et à l'entrée du by-pass 26,
- une canalisation 27 faisant communiquer la deuxième voie 10 de la vanne à trois voies avec le réservoir 17,
- et une canalisation 28 faisant communiquer la troisième voie 11 de la vanne à trois voies avec le circuit d'entrée 18, en amont de la pompe de gavage 20.

Afin que la pompe d'injection haute pression 22 fonctionne convenablement, la pression du gazole immédiatement en amont de cette pompe doit être comprise dans une plage prédéterminée, par exemple comprise entre 1,3 et 1,8 bar au-dessus de la pression atmosphérique.

A cet effet, d'une part, la pression de sortie de la pompe de gavage 20 est suffisante pour que la pression du gazole en amont de la pompe d'injection haute pression 22 soit toujours supérieure à 1,3 bar au-dessus de la pression atmosphérique, et d'autre part, le filtre 1 inclut un régulateur de pression 29 qui garantit que la pression du gazole dans le passage de sortie 16 de ce filtre n'est pas supérieure à 1,8 bar au-dessus de la pression atmosphérique.

Ce régulateur de pression 29 est constitué par une soupape de décharge montée sur un conduit de dérivation 30 qui communique, d'une part, avec le passage de sortie 16, en aval de l'élément filtrant cylindrique 31 du filtre, et d'autre part, avec la première voie 9 de la vanne 12 à trois voies, cette soupape de décharge étant prévue pour commencer à s'ouvrir lorsque la pression de gazole dans le passage de sortie 16 atteint 1,3 bar au-dessus de la pression atmosphérique, de façon à créer ainsi un écoulement de gazole vers la première voie 9 en empêchant la pression de gazole dans le passage de sortie 16, d'augmenter jusqu'à la valeur limite de 1,8 bar au-dessus de la pression atmosphérique.

Par ailleurs, le filtre 1 inclut également un by-pass de dégazage 32 qui sera décrit plus en détail ci-après et qui permet d'évacuer vers la deuxième voie 10 de la vanne 12 à trois voies les bulles de gaz qui pourraient être entraînées par le gazole et qui pourraient s'accumuler en amont de l'élément filtrant 31.

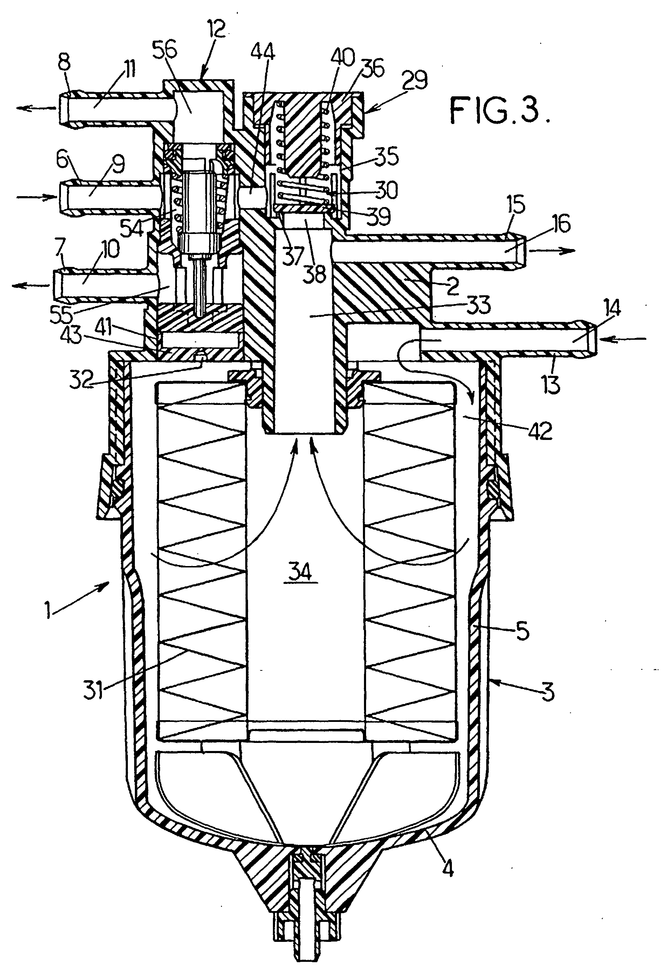

Comme représenté sur les figures 3 à 5, ce by-pass de dégazage 32 ainsi que la soupape de décharge 29 susmentionnée sont intégrés dans le couvercle fixe 2, avec la vanne à trois voies 12.

Ce couvercle 2 comprend avantageusement un corps moulé d'une seule pièce en matière plastique, qui inclut :
- les raccords 6, 7, 8, 13, 15, délimitant respectivement les voies 9, 10, 11 de la vanne 12 à trois voies ainsi que le passage d'entrée 14 et le passage de sortie 16, qui forment tous des conduits rectilignes horizontaux alignés de préférence dans un plan commun, ce qui facilite le moulage du couvercle 2,
- une cheminée verticale cylindrique 33 qui fait communiquer le passage de sortie horizontal 16 avec un espace intérieur creux 34 formé au centre de l'élément filtrant cylindrique 31,
- une chambre verticale 35 sensiblement cylindrique qui débouche vers le haut à l'extérieur du boîtier du filtre et qui est obturée dans sa partie supérieure par un bouchon 36 fixé notamment par soudure ultra-sons, par vissage, ou autres, la chambre 35 présentant à sa partie inférieure un rétrécissement qui forme un siège de clapet annulaire 37 dirigé vers le haut, ce siège de clapet 37 étant traversé par un orifice 38 qui débouche dans la cheminée verticale 33 et qui est normalement obturé.par un clapet 39 sollicité contre ce siège par un ressort 40, le siège de clapet 37, le clapet 39 et le ressort 40 constituant la soupape de décharge 29 susmentionnée,
- un puits vertical 41 qui présente une section augmentant vers le bas et qui débouche vers le bas dans une chambre 42 d'arrivée de gazole, disposée autour de l'élément filtrant cylindrique 31, le puits vertical 41 étant obturé vers le bas par un bouchon 43 qui est fixé par soudure ultra-sons, par vissage, ou autres et qui est traversé par un orifice 32 présentant une faible section de passage, par exemple inférieure à 1 mm², cet orifice 32 formant le by-pass de dégazage susmentionné, les trois voies 9, 10, 11 de la vanne à trois voies débouchant latéralement dans le puits vertical 41,
- et un conduit rectiligne horizontal 44 qui est aligné avec la première voie 9 de la vanne à trois voies, le conduit 44 étant disposé de façon diamétralement opposée à la première voie 9 par rapport au puits vertical 41, ce conduit 44 faisant communiquer ledit puits vertical 41 avec la chambre 35 susmentionnée et ledit conduit 44 présentant, pour permettre son moulage, une section inférieure ou égale à la section de la première voie 9.

A l'intérieur du puits 41, est emboîté un insert 45 en matière plastique qui comprend :
- une portée annulaire centrale 46 qui est en contact périphérique étanche avec le puits 41 entre les première et deuxième voies 9, 10 de la vanne à trois voies et qui définit intérieurement un premier siège annulaire 47,
- une deuxième portée annulaire 48 qui est en contact périphérique étanche avec le puits 41 entre les première et troisième voies 9, 11 et qui définit intérieurement un deuxième siège annulaire 49, la deuxième portée annulaire 48 étant reliée à la première portée annulaire 46 par des entretoises axiales 50 espacées les unes des autres et la deuxième portée annulaire 48 étant de préférence appuyée axialement contre un épaulement intérieur 51 du puits 41,
- et un croisillon 52 qui est appuyé axialement contre le bouchon 43 et qui est relié à la première portée annulaire 46 par des entretoises 53 séparées les unes des autres.

Le puits 41 est ainsi subdivisé en trois compartiments, savoir :
- un premier compartiment 54 central qui communique avec la première voie 9 et avec le conduit 44,
- un deuxième compartiment 55 qui est disposé sous le premier compartiment 54 et qui communique avec la deuxième voie 10 ainsi qu'avec le by-pass de dégazage 32,
- et un troisième compartiment 56, qui est disposé au-dessus du premier compartiment 54 et qui communique avec la troisième voie 11.

A l'intérieur du premier compartiment 54 du puits 41 est disposé un organe de clapet 57 qui, en l'occurence, est constitué par un pot cylindrique à l'intérieur duquel coulisse un piston 58 qui est solidarisé avec le croisillon 52 par l'intermédiaire d'une tige 59, l'espace entre le piston 58 et le fond du pot cylindrique 57 étant rempli d'une masse de cire 60, susceptible de se dilater lorsqu'elle est chauffée, et l'organe de clapet 57 étant sollicité vers le premier siège 47 par un ressort 61.

De tels dispositifs sont connus en soi dans l'état de la technique, et sont commercialisés notamment par la Société Dauphinoise Thomson, 40 rue Marcel Beretto, 38035 GRENOBLE, FRANCE.

Grâce à ces dispositions, la vanne 12 à trois voies constitue une vanne thermostatique qui fonctionne comme suit :
- tant que le gazole en excès arrivant la première voie est froid, par exemple à une température inférieure à 20°C, la masse de cire 60 ne se dilate pas, de sorte que l'organe de clapet 57 est appliqué de façon étanche sur le premier siège 47 sous l'effet du ressort 61, de façon à diriger tout le gazole en excès vers la troisième voie 11, c'est-à-dire vers le circuit d'entrée 18, ce qui permet d'obtenir un réchauffage rapide du gazole passant le filtre 1,
- lorsque le gazole en excès arrivant dans la première voie 9 est à une température comprise par exemple entre 20 et 30°C, la masse de cire 60 commence à se dilater, de sorte que l'organe de clapet 57 se déplace progressivement vers le deuxième siège 49 : dans ce cas, le gazole en excès est dirigé pour partie vers la troisième voie 11, et pour partie vers la deuxième voie 10, c'est-à-dire vers le réservoir 17,
- et lorsque la température du gazole en excès arrivant dans la première voie 9 est supérieure par exemple à 30°C, la masse de cire 60 est suffisamment dilatée pour engager l'organe de clapet 57 en contact étanche avec le deuxième siège 49, de sorte que tout le gazole en excès est dirigé vers la deuxième voie 10.

Comme il va de soi, et comme il résulte d'ailleurs de ce qui précède, l'invention n'est pas limitée à la forme de réalisation particulière qui vient d'être décrite, elle en embrasse, par exemple, les variantes dans lesquelles :
- la vanne à trois voies comporterait un organe de clapet actionné autrement que par une masse de cire sensible à la chaleur, et en particulier un organe de clapet qui serait actionné par un moteur électrique ou un solénoïde à l'extérieur du puits 41, et ce éventuellement indépendamment de la température du gazole,
- la vanne à trois voies ne comporterait pas un clapet déplaçable entre deux sièges, mais comporterait un clapet coopérant avec un siège unique et associé à une soupape de décharge, comme divulgué dans le document EP-A-0 145 946 susmentionné,
- le régulateur de pression serait différent de la soupape de décharge 29 décrite ci-dessus,
- le passage de dérivation 30 communiquerait avec la deuxième ou troisième voie de la vanne 12 à trois voies.

## Revendications

1. Filtre à gazole (1) pour moteur diesel, comportant une cartouche filtrante (31) contenue dans un boîtier étanche (2,3) qui comprend lui-même :
- un passage d'entrée (14) qui est destiné à recevoir du gazole à filtrer acheminé par l'intermédiaire d'un circuit d'entrée (18) relié à un réservoir de gazole (17), le passage d'entrée communiquant avec une chambre d'arrivée de gazole (42) qui est située à l'intérieur du boîtier en amont de l'élément filtrant,
- un passage de sortie (16) de gazole filtré, qui est situé en aval de l'élément filtrant (31) et qui est destiné à être raccordé à une pompe d'injection haute pression (22),
- et une vanne à trois voies (12) comportant :
. une première voie (9) qui communique avec l'extérieur du boîtier par l'intermédiaire d'un premier raccord (6) destiné à recevoir du gazole en excès provenant de la pompe d'injection haute pression (22), ce gazole en excès présentant une pression inférieure à la pression qui règne dans le passage d'entrée (14) du filtre,
. une deuxième voie (10) qui communique avec l'extérieur du boîtier par l'intermédiaire d'un deuxième raccord (7) destiné à être relié au réservoir de gazole (17),
. et une troisième voie (11) destinée à diriger le gazole en excès en amont de l'élément filtrant (31) sans séjourner dans le réservoir (17), la vanne à trois voies (12) pouvant être actionnée pour orienter majoritairement le gazole en excès soit vers la deuxième voie, soit vers la troisième voie,
filtre **caractérisé en ce qu'**il comporte en outre un passage de dérivation (30) qui fait communiquer le passage de sortie (16) avec au moins (9) l'une des trois voies de la vanne (12) à trois voies, ce passage de dérivation étant équipé d'un dispositif régulateur de pression (29) adapté pour fermer ledit passage de dérivation tant qu'il règne dans le passage de sortie (16) une pression inférieure à une pression prédéterminée, et pour ouvrir le passage de dérivation lorsque la pression dans le passage de sortie devient supérieure à ladite pression prédéterminée,
et **en ce que** la troisième voie (11) communique avec l'extérieur du boîtier par l'intermédiaire d'un troisième raccord (8).

2. Filtre à gazole selon la revendication 1, dans lequel la chambre d'arrivée (42) présente une zone supérieure qui communique avec la deuxième voie (10) de la vanne à trois voies par l'intermédiaire d'un orifice de dégazage (32).

3. Filtre à gazole selon l'une quelconque des revendications précédentes, dans lequel le dispositif régulateur de pression (29) est une soupape de décharge qui comprend, d'une part, un siège annulaire (37) traversé par le passage de dérivation (30), et d'autre part, un clapet (39) sollicité contre ce siège par un ressort (40), à l'encontre de la pression régnant dans le passage de sortie (16).

4. Filtre à gazole selon l'une quelconque des revendications précédentes, dans lequel le boîtier comprend un couvercle (2) fixe et une cuve inférieure (3) fixée à ce couvercle, le passage d'entrée (14), le passage de sortie (16), les trois voies de la vanne à trois voies (9-11), et le passage de dérivation (30) étant formés dans la masse dudit couvercle.

5. Filtre à gazole selon la revendication 4, dans lequel le couvercle (2) est moulé en matière plastique.

6. Filtre gazole selon l'une quelconque des revendications 4 et 5, dans lequel :
- la vanne à trois voies (12) comprend un puits vertical (41) formé à l'intérieur du couvercle, ce puits vertical comportant des premier et deuxième sièges annulaires intérieurs (47,49) qui le subdivisent en des premier, deuxième et troisième compartiments (54-56) superposés communiquant respectivement avec les première, deuxième et troisième voies (9-11) de la vanne à trois voies, le premier compartiment (54) étant interposé entre les deuxième et troisième compartiments (55,56), et ledit premier compartiment contenant un organe de clapet (57) qui est déplaçable en translation verticale sous l'effet de moyens d'actionnement (58-60) entre, d'une part, une première position ou il est en contact étanche avec le premier siège (47) en obturant la deuxième voie et, d'autre part, une deuxième position où il est en contact étanche avec le deuxième siège (49) en obturant la troisième voie,
- le dispositif régulateur de pression (30) est une soupape de décharge qui comprend, d'une part, un siège annulaire (37) qui communique avec le passage de sortie (16) et qui est traversé par le passage de dérivation (30), et d'autre part, un clapet (39) sollicité contre ce siège par un ressort (40), à l'encontre de la pression régnant dans le passage de sortie (16), ce clapet et ce ressort étant logés dans une chambre verticale (35) formée dans le couvercle (2),
- et le passage de dérivation (29) comprend un premier conduit rectiligne horizontal (44) qui est formé dans le couvercle (2) et qui débouche, d'une part, dans la chambre (35) contenant ledit clapet, et d'autre part, dans un (54) des compartiments du puits vertical de la vanne à trois voies, ce compartiment (54) débouchant à l'extérieur du boîtier du filtre par l'intermédiaire d'un deuxième conduit rectiligne (9) qui forme le raccord (6) correspondant à ce compartiment et qui est aligné avec le premier conduit rectiligne (44).

7. Filtre à gazole selon la revendication 6, dans lequel le deuxième compartiment (55) du puits vertical de la vanne à trois voies est situé sous le premier compartiment (54) et communique avec la zone supérieure de la chambre d'arrivée de gazole (42) par l'intermédiaire d'un orifice de dégazage (32).

8. Filtre à gazole selon la revendication 7, dans lequel le puits vertical (41) de la vanne à trois voies est un puits borgne débouchant vers le bas, ce puits étant fermé en partie inférieure par un bouchon (43) qui est fixé au couvercle (2) du boîtier et qui inclut l'orifice de dégazage (32), lequel orifice de dégazage présente une section de passage inférieure à 1 mm².

9. Filtre à gazole selon l'une quelconque des revendications 5 à 8, dans lequel le passage d'entrée (14) et le passage de sortie (16) du filtre communiquent avec l'extérieur du boîtier par l'intermédiaire respectivement de quatrième et cinquième raccords (13,15), les premier, deuxième, troisième, quatrième et cinquième raccords (6-8, 13, 15) formant tous des conduits horizontaux parallèles les uns aux autres.

10. Dispositif d'alimentation en gazole pour moteur diesel, comportant :
- un filtre à gazole (1) selon l'une quelconque des revendications précédentes,
- un réservoir de gazole (17),
- un circuit d'entrée (18) qui inclut une pompe de gavage (20) et qui relie le réservoir de gazole au passage d'entrée (14) du filtre,
- une pompe d'injection haute pression (22) alimentée par le passage de sortie (16) du filtre et alimentant elle-même une rampe d'injecteurs (24),
- un circuit de retour de gazole (25), recevant du gazole en excès provenant de la pompe d'injection haute pression, ce circuit de retour de gazole étant relié au premier raccord (6) du filtre, ce gazole en excès étant à une pression inférieure à la pression qui règne dans le passage d'entrée (14) du filtre,
- une canalisation reliant le deuxième raccord (7) du filtre au réservoir (17),
- et une canalisation reliant le troisième raccord (8) du filtre au circuit d'entrée (18), en amont de la pompe de gavage (20).

## Claims

1. A fuel filter (1) for a diesel engine, comprising a filter cartridge (31) contained in a sealed housing (2, 3) which itself comprises:
- an inlet passage (14) for receiving the fuel to be filtered, fed by way of an inlet circuit (18) connected to a fuel tank (17), the inlet passage communicating with a fuel inlet chamber (42) which is located inside the housing upstream of the filter element,
- an outlet passage (16) for filtered fuel which is located downstream of the filter element (31) and which is adapted to be connected to a high pressure injector pump (22),
- a three-way valve (12) comprising:
• a first port (9) which communicates with the exterior of the housing by way of a first connector (6) for receiving excess fuel coming from the high pressure injection pump (22), this excess fuel having a pressure lower than the pressure which obtains in the inlet passage (14) of the filter,
• a second port (10) which communicates with the exterior of the housing by way of a second connector (7) for connection to the fuel tank (17),
• and a third port (11) for sending the excess fuel to upstream of the filter element (31) without residence in the reservoir (17), the three-way valve (12) being operable to direct the excess fuel mainly either towards the second port or towards the third port,
**characterized in that** the filter further comprises a bypass passage (30) which places the outlet passage (16) in communication with at least one (9) of the three ports of the three-way valve (12), this bypass passage being provided with a pressure regulating device (29) adapted to close the said bypass passage inasmuch as the pressure in the outlet passage (16) is below a predetermined pressure and to open the bypass passage when the pressure in the outlet passage becomes greater than the said predetermined pressure,
and **in that** the third port (11) communicates with the exterior of the housing by way of a third connector (8).

2. A fuel filter according to claim 1, in which the inlet chamber (42) has an upper zone which communicates with the second port (10) of the three-way valve by way of a degassing orifice (32).

3. A fuel filter according to either of the preceding claims, in which the pressure regulating device (29) is a discharge valve which comprises on the one hand an annular seat (27) through which the bypass passage (30) passes and on the other hand a valve element (39) biased against the seat by a spring (40) against the pressure obtaining in the outlet passage (16).

4. A fuel filter according to any of the preceding claims, in which the housing has a fixed cover (2) and lower vessel (3) fixed to the cover, the inlet passage (14), the outlet passage (16), the three ports of the three-way valve (9-11) and the bypass passage (30) being formed in the body of the said cover.

5. A fuel filter according to claim 4, in which the cover (2) is moulded in plastics material.

6. A fuel filter according to either of claims 4 and 5, in which:
- the three-way valve (12) comprises a vertical bore (41) formed within the cover, this vertical bore comprising first and second internal annular seats (47, 49) which divide it into first, second and third compartments (54-56) communicating with the first, second and third ports (9-11) respectively of the three-way valve, the first compartment (54) being interposed between the second and third compartments (55, 56) and the said first compartment containing a valve element (57) which can move vertically under the influence of actuating means (58-60) between on the one hand a first position in which it is sealed contact with the first seat (47) and blocks the second port and on the other hand a second position in which it is in sealed contact with the second seat (49) and blocks the third port,
- the pressure regulating device (30) is a discharge valve which comprises on the one hand an annular seat (37) which communicates with the outlet passage (16) and through which the bypass passage (30) passes, and on the other hand a valve element (39) biased against the seat by a spring (40) against the pressure obtaining in the outlet passage (16), this valve element and this spring being fitted in a vertical chamber (35) formed in the cover (2),
- and the bypass passage (29) comprises a first horizontal straight duct (44) which is formed in the cover and opens on the one hand into the chamber (35) containing the said valve element, and on the other hand into one (54) of the compartments of the vertical bore of the three-way valve, this compartment (54) opening to the exterior of the housing of the filter by way of a second straight duct (9) which forms the connector (6) corresponding to this compartment and which is aligned with the first straight duct (44).

7. A fuel filter according to claim 6, in which the second compartment (55) of the vertical bore of the three-way valve is located below the first compartment and communicates with the upper zone of the fuel inlet chamber (42) by way of a degassing orifice (32).

8. A fuel filter according to claim 7, in which the vertical bore (41) of the three-way valve is a blind bore open at the bottom, this bore being closed in the lower part by a plug (43) which if fixed to the cover (2) of the housing and which includes the degassing orifice (32), the said degassing orifice having a cross-section less than 1 mm ².

9. A fuel filter according to any of claims 5 to 8, in which the inlet passage (14) and the outlet passage (16) of the filter communicate with the exterior of the housing by way of fourth and fifth connectors (13, 15) respectively, the first, second, third, fourth and fifth connectors (6-8, 13, 15) all forming horizontal pipes parallel to one another.

10. A device for supplying fuel to a diesel engine, comprising:
- a fuel filter (1) according to any of the preceding claims,
- a fuel tank (17),
- an inlet circuit (18) which includes a booster pump (20) and which connects the fuel reservoir to the inlet passage (14) of the filter,
- a high pressure injector pump (22) supplied by the outlet passage (16) of the filter and itself suppling a row of injectors (24),
- fuel return circuit (25) receiving the excess fuel from the high pressure injector pump, this fuel return circuit being connected to the first connector (6) of the filter, this excess fuel being at a pressure lower than the pressure which obtains in the inlet passage (14) of the filter,
- a conduit connecting the second connector (7) of the filter to the reservoir (17),
- and a conduit connecting the third connector (8) of the filter to the inlet circuit (18) upstream of the booster pump (20).

## Patentansprüche

1. Kraftstofffilter (1) für Dieselmotoren, der eine Filterkartusche (31) umfasst, die in einem dichten Gehäuse (2, 3) enthalten ist, das selbst umfasst:
- einen Eintrittskanal (14), der dazu bestimmt ist, zu filternden Kraftstoff aufzunehmen, der ihm über eine Einlassleitung (18) zugeführt wird, die mit einem Kraftstofftank (17) verbunden ist, wobei der Eintrittskanal mit einer Kraftstoffzufuhrkammer (42) verbunden ist, die sich im Inneren des Gehäuses vor dem Filterelement befindet,
- einen Austrittskanal (16) für den gefilterten Kraftstoff, der dem Filterelement (31) nachgeschaltet und dazu vorgesehen ist, an eine Hochdruck-Einspritzpumpe (22) angeschlossen zu werden,
- und ein Dreiwegeventil (12), das umfasst:
. eine erste Leitung (9), die mit der äußeren Umgebung des Gehäuses über einen ersten Anschluss (6) verbunden ist, der dazu bestimmt ist, von der Hochdruck-Einspritzpumpe (22) kommenden überschüssigen Kraftstoff aufzunehmen, wobei der Druck dieses überschüssigen Kraftstoffs niedriger ist als der Druck, der in dem Eintrittskanal (14) des Filters herrscht,
. eine zweite Leitung (10), die mit der äußeren Umgebung des Gehäuses über einen zweiten Anschluss (7) verbunden ist, der dazu bestimmt ist, mit dem Kraftstofftank (17) verbunden zu werden,
. und eine dritte Leitung (11), die dazu bestimmt ist, den überschüssigen Kraftstoff vor das Filterelement (31) zu leiten, ohne dass dieser über den Tank (17) geführt wird, wobei das Dreiwegeventil (12) so betätigt werden kann, dass es den überschüssigen Kraftstoff überwiegend entweder zur zweiten oder dritten Leitung leitet,
ein Filter, der **dadurch gekennzeichnet ist, dass** er ferner eine Umgehungsleitung (30) umfasst, die den Austrittskanal (16) mit mindestens einer (9) der drei Leitungen des Dreiwegeventils (12) verbindet, wobei diese Umgehungsleitung mit einem Druckregler (29) verbunden ist, der geeignet ist, die Umgehungsleitung zu schließen, solange in dem Austrittskanal (16) ein Druck herrscht, der einen vorbestimmten Druck unterschreitet, und die Umgehungsleitung zu öffnen, wenn der Druck im Austrittskanal höher als der vorbestimmte Druck wird,
und dadurch, dass die dritte Leitung (11) mit der äußeren Umgebung des Gehäuses über einen dritten Anschluss (8) verbunden ist.

2. Kraftstofffilter nach Anspruch 1, bei dem die Zuführkammer (42) einen oberen Bereich aufweist, der mit der zweiten Leitung (10) des Dreiwegeventils über eine Gasabscheidungsöffnung (32) verbunden ist.

3. Kraftstofffilter nach einem der vorstehenden Ansprüche, bei dem der Druckregler (29) ein Entlastungsventil ist, das einerseits einen ringförmigen Sitz (37) umfasst, durch den die Umgehungsleitung (30) geführt ist, sowie andererseits eine Klappe (39), die gegen diesen Sitz von einer Feder (40) gezogen wird, gegen den im Austrittskanal (16) herrschenden Druck.

4. Kraftstofffilter nach einem der vorstehenden Ansprüche, bei dem das Gehäuse einen fest sitzenden Deckel (2) und einen unteren Behälter (3) umfasst, der an diesem Deckel befestigt ist, wobei der Eintrittskanal (14), der Austrittskanal (16), die drei Leitungen des Dreiwegeventils (9-11) und die Umgehungsleitung (30) in der Masse des Deckels gebildet sind.

5. Kraftstofffilter nach Anspruch 4, bei dem der Deckel (2) aus Kunststoff formgegossen ist.

6. kraftstofffilter nach einem der Ansprüche 4 und 5, bei dem:
- das Dreiwegeventil (12) eine vertikale Bohrung (41) aufweist, die im Inneren des Deckels gebildet ist, wobei diese vertikale Bohrung einen ersten und einen zweiten ringförmigen inneren Sitz (47, 49) umfasst, die es in einen ersten, zweiten und dritten Raum (54-56) teilen, die übereinander angeordnet sind und jeweils mit der ersten, zweiten bzw. dritten Leitung (9-11) des Dreiwegeventils verbunden sind, wobei der erste Raum (54) zwischen dem zweiten und dritten Raum (55, 56) angeordnet ist und der erste Raum eine Ventileinrichtung (57) enthält, die in Vertikalverschiebung unter dem Druck von Betätigungsvorrichtungen (58-60) zwischen einerseits einer ersten Position, in der sie in dichtem Kontakt mit dem ersten Sitz (47) steht und die zweite Leitung verschließt, und andererseits einer zweiten Position verschiebbar ist, in der sie in dichtem Kontakt mit dem zweiten Sitz (49) steht und die dritte Leitung verschließt,
- der Druckregler (30) ein Entlastungsventil ist, das einerseits einen ringförmigen Sitz (37) aufweist, der mit dem Austrittskanal (16) verbunden ist und durch den die Umgehungsleitung (30) geführt ist, und andererseits eine Klappe (39), die gegen diesen Sitz von einer Feder (40) gezogen wird, gegen den im Austrittskanal (16) herrschenden Druck, wobei diese Klappe und diese Feder in einer vertikalen Kammer (35) angeordnet sind, die in dem Deckel (2) geformt ist,
- und die Umgehungsleitung (29) eine erste gerade, horizontale Leitung (44) umfasst, die in dem Deckel (2) gebildet ist und einerseits in die Kammer (35) mündet, die die Klappe enthält, und andererseits in einen (54) der Räume der vertikalen Bohrung des Dreiwegeventils, wobei dieser Raum (54) außerhalb des Filtergehäuses über eine zweite gerade Leitung (9) mündet, die den diesem Raum entsprechenden Anschluss (6) bildet und auf die erste gerade Leitung (44) gefluchtet ist.

7. Kraftstofffilter nach Anspruch 6, bei dem der zweite Raum (55) der vertikalen Bohrung des Dreiwegeventils unter dem ersten Raum (54) angeordnet ist und über eine Gasabscheidungsöffnung (32) mit dem oberen Bereich der Kraftstoffzufuhrkammer (42) verbunden ist.

8. Kraftstofffilter nach Anspruch 7, bei dem die vertikale Bohrung (41) des Dreiwegeventils eine nach unten mündende Blindbohrung ist, wobei diese Bohrung unten durch einen Stopfen (43) verschlossen ist, der am Deckel (2) des Gehäuses befestigt ist und die Gasabscheidungsöffnung (32) einschließt, welche Gasabscheidungsöffnung einen Durchtrittsquerschnitt von weniger als 1 mm² aufweist.

9. Kraftstofffilter nach einem der Ansprüche 5 bis 8, bei dem der Eintrittskanal (14) und der Austrittskanal (16) des Filters mit der äußeren Umgebung des Gehäuses jeweils über einen vierten bzw. fünften Anschluss (13, 15) verbunden sind, wobei erster, zweiter, dritter, vierter und fünfter Anschluss (6-8, 13, 15) jeweils zueinander parallele, horizontale Kanäle bilden.

10. Kraftstoffzufuhrvorrichtung für Dieselmotoren, die umfasst:
- einen Kraftstofffilter (1) nach einem der vorstehenden Ansprüche,
- einen Kraftstofftank (17),
- eine Einlassleitung (18), die eine Zusatzpumpe (20) umfasst und den Kraftstofftank mit dem Eintrittskanal (14) des Filters verbindet,
- eine Hochdruck-Einspritzpumpe (22), die von dem Austrittskanal (16) des Filters versorgt wird und selbst eine Einspritzleitung (24) versorgt,
- eine Rückführleitung für Kraftstoff (25), die von der Hochdruck-Einspritzpumpe kommenden überschüssigen Kraftstoff aufnimmt, wobei diese Kraftstoffrückfuhrieitung mit dem ersten Anschluss (6) des Filters verbunden ist und dieser überschüssige Kraftstoff einen Druck aufweist, der niedriger ist als der Druck, der in dem Eintrittskanal (14) des Filters herrscht,
- eine Leitung, die den zweiten Anschluss (7) des Filters mit dem Tank (17) verbindet,
- und eine Leitung, die den dritten Anschluss (8) des Filters vor der Zusatzpumpe (20) mit der Einlassleitung (18) verbindet.
